# EUROPÄISCHE PATENTSCHRIFT

(11) **EP 3 608 212 B1**
(45) Veröffentlichungstag und Bekanntmachung des Hinweises auf die Patenterteilung: **14.04.2021**
(21) Anmeldenummer: 19000348.3
(22) Anmeldetag: 25.07.2019
(51) Int. Cl.: B62D 29/04, B62D 33/04

(54) **LEICHTBAUCONTAINER**
LIGHTWEIGHT CONTAINER
CONTAINER LÉGER

(30) Priorität: 26.07.2018 DE 102018006186; 26.07.2018 DE 202018003660 U
(43) Veröffentlichungstag der Anmeldung: 12.02.2020
(73) Patentinhaber: TGM Lightweight Solutions GmbH, 13507 Berlin (DE)
(72) Erfinder: Dahm, Hans-Peter, 13465 Berlin (DE); Winkler, Julius V., 10317 Berlin (DE); Stratz, Raffael, 13407 Berlin (DE)
(74) Vertreter: ETL IP Patent- und Rechtsanwaltsgesellschaft mbH

(56) Entgegenhaltungen:
- EP-A1- 2 508 407
- EP-A2- 0 038 550
- DE-A1- 2 519 457

## Beschreibung

Die Erfindung betrifft einen Gerätecontainer, wie er in großer Vielfalt in den Bereichen des Schienen- und Nutzfahrzeugbaus eingesetzt wird. Diese Container beinhalten Stromversorgungskomponenten zur Wandlung, Speicherung und Steuerung, Klimakomponenten zur Medienversorgung oder andere Versorgungseinrichtungen. Aufgrund ihrer Größe befinden sich diese Container oft im Unterflurbereich (Untergestellbereich) oder auf dem Dach.

Grundsätzlich wird beim Containerbau dabei zwischen der Differential- und der Integralbauweise als Konstruktionsbauweisen unterschieden.

Bei der Differentialbauweise werden die innenliegenden Komponenten und die äußere Verkleidung über Halterungen an einem Tragrahmen bzw. Gerüst befestigt, das die äußeren Beschleunigungs- und Bremslasten aus dem Fahrbetrieb sowie die Crashlasten aufnimmt und über Befestigungspunkte oder Lagerstellen an den Wagenkasten bzw. Karosserie weiterleitet. Bei diesem Konstruktionsprinzip hat die äußere Beplankung eine strukturell untergeordnete Funktion und ist primär für die Verkleidung vorgesehen. Die Hauptlasten (Biege- und Torsionlasten), die auf einen Differentialcontainer wirken, werden vorwiegend über den Tragrahmen abgetragen. Üblicherweise wird dieser in Metallrahmenbauweise mit Metallblech- oder. Sandwichbeplankung ausgeführt.

Die Integralbauweise dagegen bindet alle innenliegenden Komponenten direkt am Intergralgehäuse an, welches die Funktion des Gehäuses an sich und der Tragstruktur abbildet. Hierbei werden durch Blechstrukturierung profilähnliche Strukturen integral im Korpus ausgeformt (mehrfache Abkantung, Sicken, Bombierung) oder Sandwichplatten zu einem Integralkorpus verbunden, der keine zusätzlichen Profilrahmenstrukturen erfordert.

Das Dokument EP 2 508 407 A1, das als der nächstliegende Stand der Technik angesehen wird, offenbart einen Leichtbaucontainer mit einem beplankten Tragrahmen aus Rahmenprofilen, wobei die Rahmenprofile des Tragrahmens durch Knoten miteinander verbunden sind und die Beplankung aus Sandwichplatten mit dünnen Deckschichten besteht, die jeweils an die Rahmenprofile angeschlossen sind.

Aufgabe der Erfindung ist es, derartige Container in Leichtbauweise auszubilden und gleichzeitig die Voraussetzungen für eine modulare Bauweise zu schaffen.

Dabei wird erfindungsgemäß auf die Ausnutzung von Schubfeldern zurückgegriffen, wie sie in der Leichtbauweise genutzt werden.

Als Beispiel soll auf die DE 10 2011 113 742 B4 verwiesen werden. Hier wird in einem biegebelasteten Träger mit einer faserverstärkten Kunststoffschicht mittels der Kunststoffschicht ein Schubfeld aufgebaut, so dass punktförmige Lasten in die Fläche geleitet werden. Die Folge ist eine Materialersparnis infolge möglicher Querschnittreduzierungen bei gleicher Steifigkeit.

Der erfindungsgemäße Leichtbaucontainer mit einem beplankten Tragrahmen aus Rahmenprofilen ist dadurch gekennzeichnet, dass die Rahmenprofile des Tragrahmens durch nachgiebig gestaltete Knoten miteinander verbunden sind und die Beplankung aus dünnen mittragenden strukturierten oder hybriden auf Beulung ausgelegten Blechfedern oder aus Sandwichplatten mit dünnen Deckschichten besteht, die jeweils an die Rahmenprofile angeschlossen sind.

Durch diese Anordnung wird die Beplankung von ihrer einseitigen Verkleidungsfunktion befreit und in den Abbau von Spannungen durch den Aufbau von Schubfeldern integriert.

Die mittragenden strukturierten oder hybriden Blechfelder sind bevorzugt auf die Tragrahmen per Laserstrahlschweißung aufgebracht, so dass keine größeren Gefügeveränderungen auftreten.

Die Sandwichplatten sind bevorzugt mit dünnen Deckschichten verschweißt oder über ein formschlüssiges Befestigungssystem zusammengefügt und verklebt.

Eine bevorzugte Ausführung der hybriden Blechfelder sind Hybridlaminate, wobei die eingesetzten Hybridlaminate eigenspannungsarm ausgebildet sein sollten.

Die nachgiebig gestalteten Knoten, mit denen die Rahmenprofile des Tragrahmens miteinander verbunden sind, sind bei einer bevorzugten Ausführung mit richtungsabhängiger Steifigkeit bionisch optimierte Verbindungsknoten.

Bionisch im erfindungsgemäßen Sinn bedeutet, dass die Knotenstruktur mithilfe von Algorithmen erzeugt wird, welche innerhalb eines zuvor definierten Bauraumes unter Zuhilfenahme von mathematischen Optimierungsansätzen eine ideale Knotengestalt entwickeln.

Die so entstehenden Knoten weisen unterschiedliche Steifigkeitskorridore auf, wodurch die auftretenden Lasten optimal aufgenommen werden können, ohne die mittragende Wirkung der Beplankung negativ zu beeinflussen. Hergestellt werden derartige Verbindungsknoten bevorzugt durch generative Fertigungsverfahren, d.h. Fertigungsverfahren, bei denen der Aufbau der Bauteile durch wiederholtes und schichtweises Auftragen von Material erfolgt. Die dadurch entfallenden Restriktionen anderer Fertigungsverfahren ermöglichen eine optimale Umsetzung der optimierten Bauteile.

Zur Verbindung der Knoten mit den Rahmenprofilen werden bevorzugt Einsteckelemente der Knoten genutzt.
Diese Einsteckelemente kontaktieren bei rechteckigen oder quadratischen Rahmenprofilen diese in mindestens einem, vorzugsweise drei Eckbereichen des jeweiligen Rahmenprofils.

Auf diese Weise lässt sich auch die Belastbarkeit der Knoten in bestimmte Richtungen steuern.

Zur Fixierung der Container z.B. auf einer Plattform können die Knoten Ösen aufweisen.

Bei einer bevorzugten Ausführung sind die Knoten auf der Außenseite des Containers durch Dichtelemente abgedeckt. Das schützt nicht nur die Knoten, sondern verhindert auch das Eindringen von Feuchtigkeit in den Container, was bei elektrischen Bauteilen im Container zwingend sein kann.

Um mehrere Container zu einer Reihe zu verbinden, ist weiterhin vorgesehen, dass Knoten über einen zusätzlichen Anschluss für den entsprechenden Knoten des weiteren Containers verfügen.

Die Erfindung soll anhand der Zeichnungen erläutert werden. Es zeigen:
- Fig. 1: einen Leichtbaucontainer mit zwei Öffnungen,
- Fig. 2: ein quadratisches Rahmenprofil,
- Fig. 3: Knoten Außen Unten,
- Fig. 4: Knoten Außen Oben,
- Fig. 5: Knoten Außen Oben eingebaut,
- Fig. 6: Knoten Mitte Unten
- Fig. 7: Knoten Mitte Oben
- Fig. 8: Dichtelement Ecke und
- Fig. 9: Dichtelement Mitte.

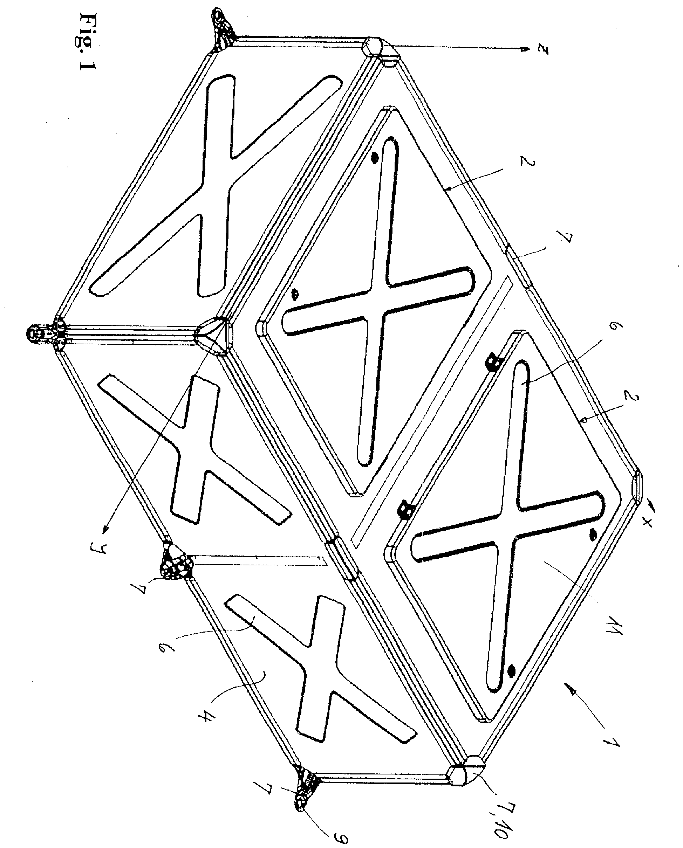

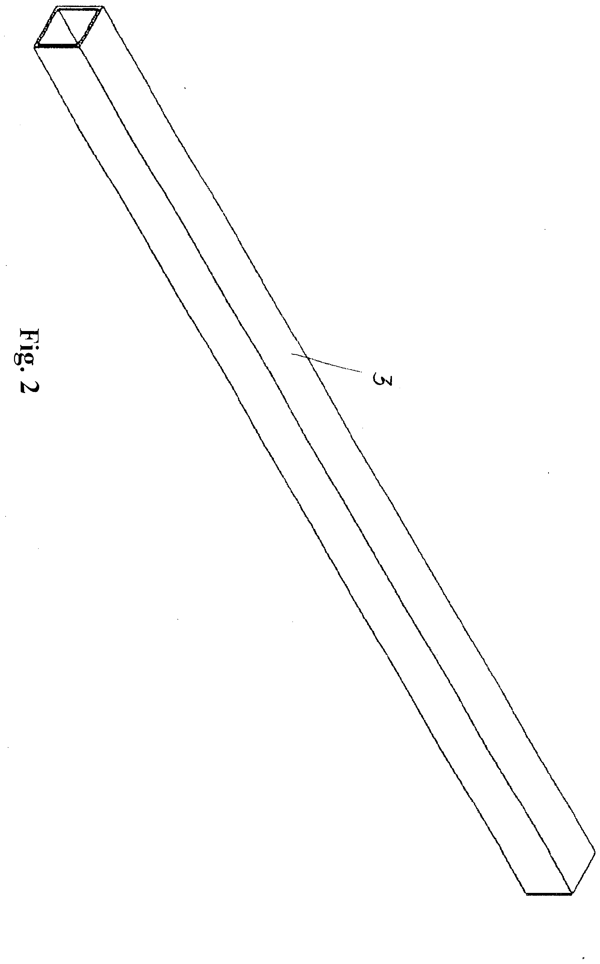

**Fig. 1** zeigt einen erfindungsgemäßen Leichtbaucontainer, der einen beplankten Tragrahmen aus durch Knoten 7 miteinander verbundenen Rahmenprofilen 3 aufweist. Bei den Rahmenprofilen 3 handelt es sich um quadratische Kastenprofile (Fig. 2). Dabei kommen zum Einsatz:
8 Rahmenprofile in X-Richtung
6 Rahmenprofile in Z-Richtung
6 Rahmenprofile in Y-Richtung,
die durch insgesamt 12 Knoten 7 miteinander verbunden sind.

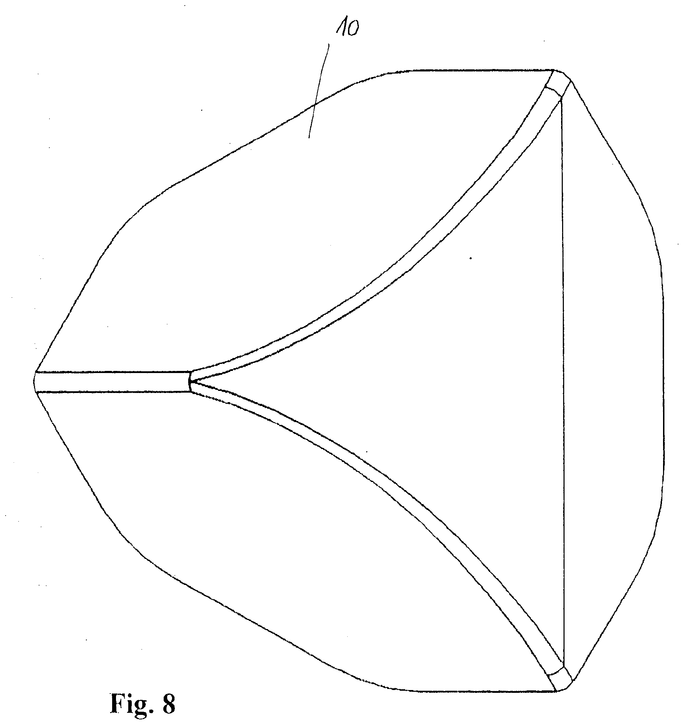

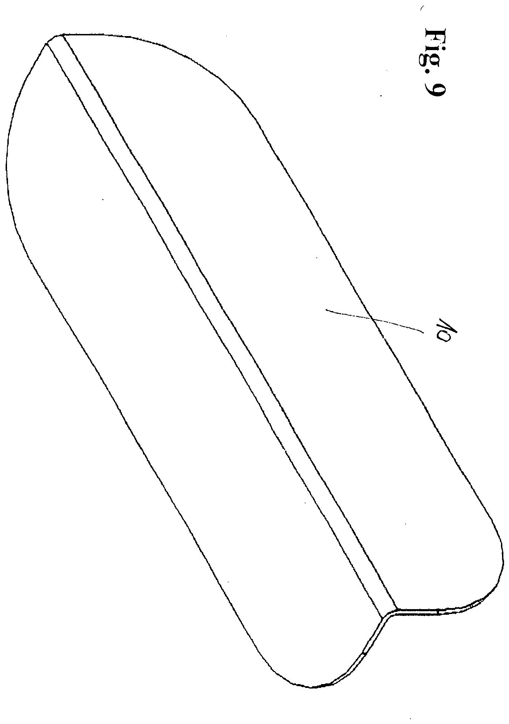

Die Knoten 7 sind durch Dichtelemente 10 abgedeckt (Fig. 8 und Fig. 9).

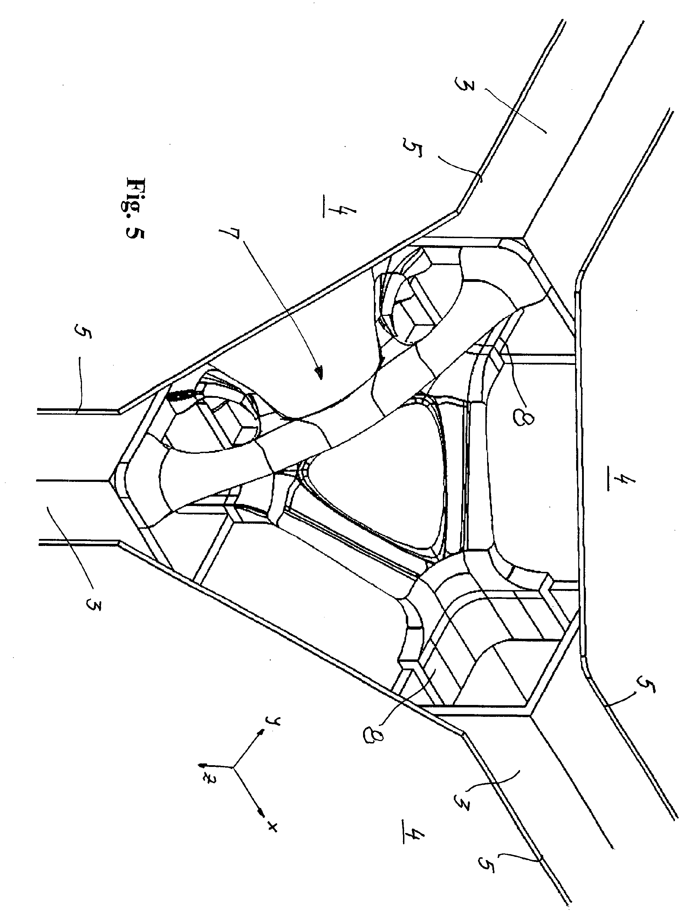

Die Beplankung besteht aus Blechfeldern 4, die im Bereich der Knoten 7 ausgeschnitten (Fig. 5) sind. Die Blechfelder 4 sind durch Sicken 6 beulsteif strukturiert und mit den Rahmenprofilen 3 durch Laserstrahlschweißung 5 (Fig. 5) verbunden.

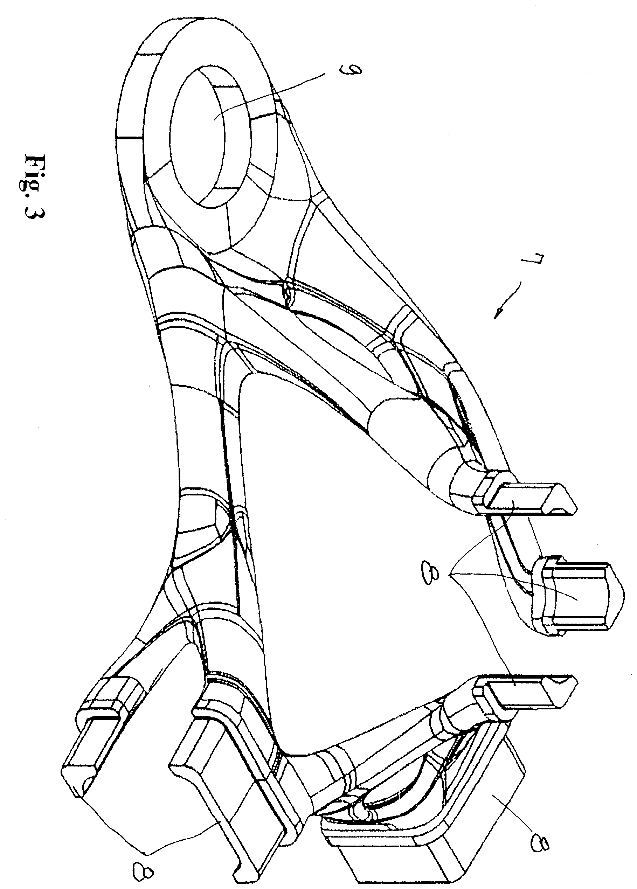

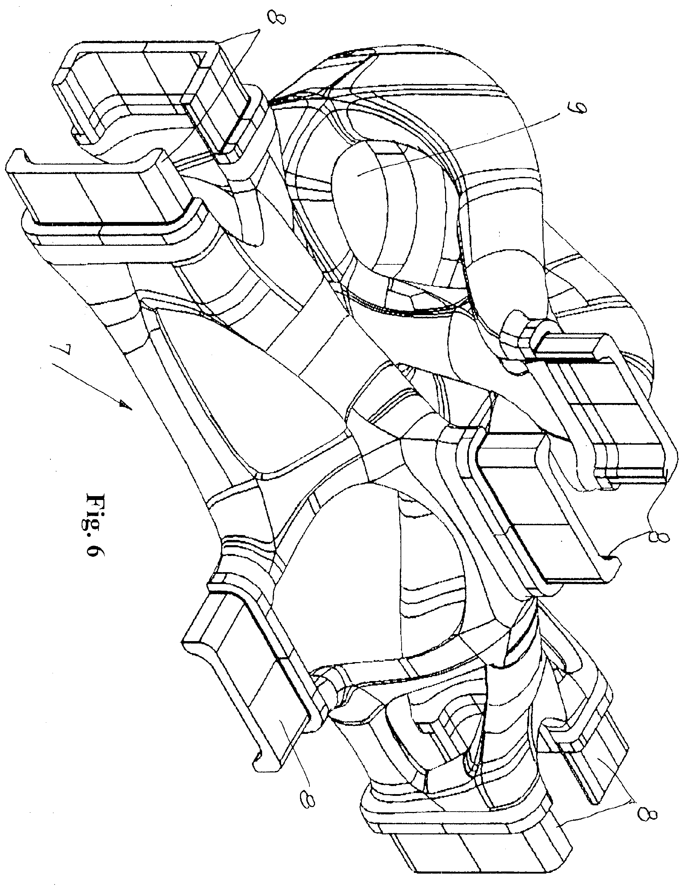

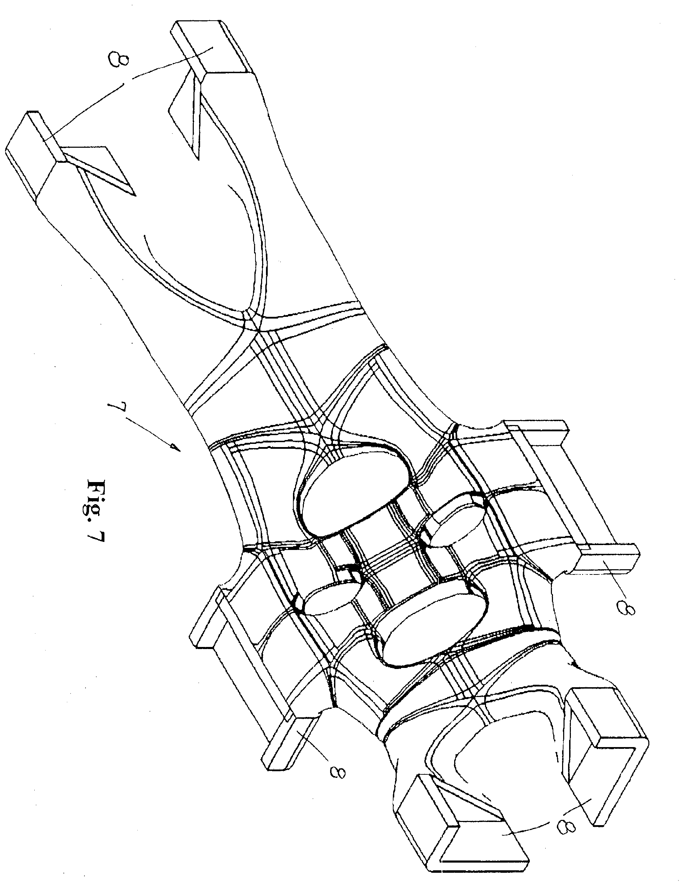

Die Knoten 7, einzeln dargestellt in den Fig. 3, 4, 6 und 7 sind nachgiebig gestaltet. Es handelt sich um mit richtungsabhängiger Steifigkeit bionisch optimierte Knoten 7, die durch generative Fertigverfahren hergestellt sind.

Die Knoten 7 sind mit den Rahmenprofilen 3 durch Einsteckelemente 8 der Knoten 7 verbunden, wobei die Einsteckelemente 8 die Verbindung in den Eckbereichen der Rahmenprofile 3 herstellen. Vorzugsweise kontaktieren die Einsteckelemente 8 ein bis drei Eckbereiche der Rahmenprofile 3.

Durch die Anordnung der Knoten 7, ihre Ausbildung als bewegliche Verbindung mit den Rahmenprofile 3, und den Blechfelder 4 werden punktuelle Belastungen als Schubfelder in die Flächen der Blechfelder 4 verlagert und lassen so Materialeinsparungen zwischen 15 - 20 % gegenüber Konstruktionen mit biege- und torsionssteifen Traggerüsten zu.

Die Nutzung der Lasertechnologie beim Verschweißen gewährleistet darüber hinaus einen wärmearmen Fügeprozess und damit nur geringfügige Gefügeänderungen bei dem eingesetzten Material - hier Stahl.

Grundsätzlich ist die benannte Konstruktionsweise auch in Kunststoff realisierbar, wobei bei den genannten Einsatzfeldern jedoch die jeweils spezifischen Anforderungen an weitere Materialeigenschaften, wie z.B. Brennbarkeit, zu beachten sind.

Mit der vorgeschlagenen Konstruktionsweise lässt sich auch eine Modulbauweise realisieren, einmal indem Knoten 7 einen weiteren Anschluss für einen benachbarten Container 1 aufweisen oder indem durch verschiedene Knotengrößen auch auf unterschiedliche Belastungen reagiert werden kann.

Der Effekt besteht hier darin, dass durch die Knoten 7 Formänderungsenergie auf benachbarte Blechfelder des oder weiterer Container 1 verteilt werden. Es wird ein mechanisches System geschaffen.

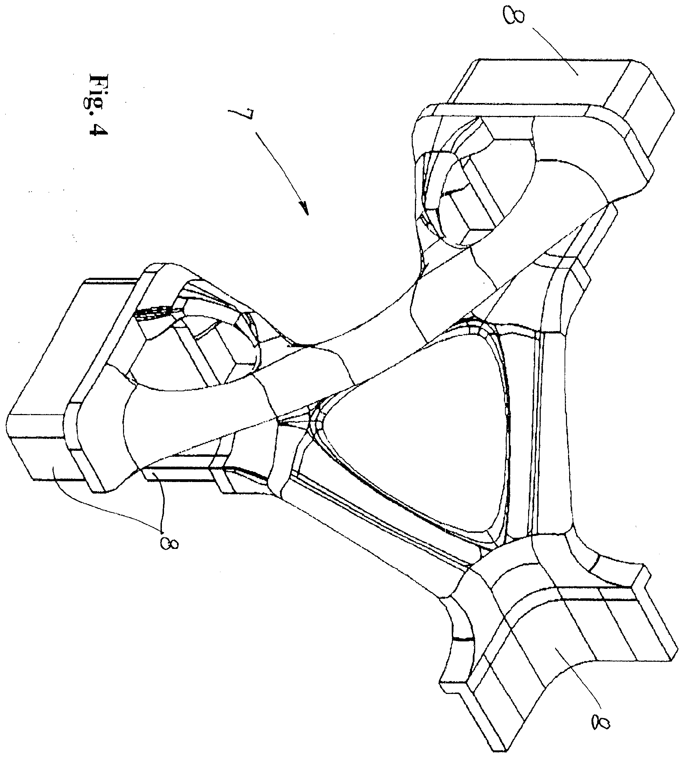

Fig. 5 zeigt in einer Detailansicht einen eingebauten Knoten 7, hier einen Knoten Außen Oben aus Fig. 4.

Dieser Knoten 7 greift in das Rahmenprofil 3 in Y-Richtung in drei Eckbereiche mit seinen Einsteckelementen 8 ein, in das Rahmenprofil 3 in X-Richtung in einen Eckbereich und in Z-Richtung in zwei Eckbereiche.

Durch die bionische Ausbildung wird eine Krafteinleitung in die mit den Rahmenprofilen 3 durch Laserstrahlschweißnähte 5 verbundenen Blechfelder 4 in Form von Schubfeldern realisiert.

### Bezugszeichenliste

- 1: Container
- 2: Öffnungen
- 3: Rahmenprofil
- 4: Beplankung in Form von Blechfeldern
- 5: Verschweißung Blechfeld Rahmenprofil
- 6: Sicken
- 7: Knoten
- 8: Einsteckelemente
- 9: Ösen
- 10: Dichtelemente
- 11: Deckel

## Patentansprüche

1. Leichtbaucontainer mit einem beplankten Tragrahmen aus Rahmenprofilen, **dadurch gekennzeichnet, dass**
die Rahmenprofile (3) des Tragrahmens durch nachgiebig gestaltete Knoten (7) miteinander verbunden sind und die Beplankung aus dünnen mittragenden strukturierten oder hybride auf Beulung ausgelegten Blechfedern (4) oder aus Sandwichplatten mit dünnen Deckschichten besteht, die jeweils an die Rahmenprofile (3) angeschlossen sind.

2. Leichtbaucontainer nach Anspruch 1, **dadurch gekennzeichnet, dass**
die mittragenden strukturierten oder hybriden Blechfelder (4) auf die Tragrahmen per Laserstrahlschweißung (5) aufgebracht sind.

3. Leichtbaucontainer nach Anspruch 1, **dadurch gekennzeichnet, dass**
die Sandwichplatten mit dünnen Deckschichten verschweißt oder über ein formschlüssiges Befestigungssystem zusammengefügt und verklebt sind.

4. Leichtbaucontainer nach Anspruch 1, **dadurch gekennzeichnet, dass**
die hybriden Blechfelder (4) Hybridlaminate sind.

5. Leichtbaucontainer nach Anspruch 4, **dadurch gekennzeichnet, dass**
die eingesetzten Hybridlaminate eigenspannungsarm ausgebildet sind.

6. Leichtbaucontainer nach einem der Ansprüche 1 bis 5, **dadurch gekennzeichnet, dass**
die nachgiebig gestalteten Knoten (7) mit richtungsabhängiger Steifigkeit bionisch optimierte Verbindungsknoten sind.

7. Leichtbaucontainer nach Anspruch 6, **dadurch gekennzeichnet, dass**
die Verbindungsknoten durch generative Fertigungsverfahren hergestellt sind.

8. Leichtbaucontainer nach einem der Ansprüche 1 bis 7, **dadurch gekennzeichnet, dass**
die Knoten (7) über Einsteckelemente (8) mit Rahmenprofilen (3) verbunden sind.

9. Leichtbaucontainer nach Anspruch 8, **dadurch gekennzeichnet, dass**
die Einsteckelemente (8) bei rechteckigen oder quadratischen Rahmenprofilen (3) diese in mindestens einem, vorzugsweise drei Eckbereichen des Rahmenprofils (3) kontaktieren.

10. Leichtbaucontainer nach einem der Ansprüche 1 bis 9, **dadurch gekennzeichnet, dass**
Knoten (7) Ösen (9) zur Fixierung des Containers (1) auf einer Plattform aufweisen.

11. Leichtbaucontainer nach einem der Ansprüche 1 bis 10, **dadurch gekennzeichnet, dass**
die Knoten (7) auf der Außenseite des Containers (1) durch Dichtelemente (10) abgedeckt sind.

12. Leichtbaucontainer nach einem der Ansprüche 1 bis 11, **dadurch gekennzeichnet, dass**
zur Aneinanderreihung von Container (1) Knoten (7) über einen zusätzlichen Anschluss für den entsprechenden Knoten (7) des weiteren Containers (1) verfügen.

## Claims

1. A lightweight container having a planked support frame made of frame profiles, **characterized in that**
the frame profiles (3) of the support frame are connected to each other by nodes (7) which are designed to be flexible and the planking consists of thin supporting structured or hybrid metal panels (4) configured for buckling or of sandwich panels with thin cover layers which are each attached to the frame profiles (3).

2. The lightweight container according to Claim 1, **characterized in that** the supporting structured or hybrid metal panels (4) are mounted on the support frame by laser beam welding (5).

3. The lightweight container according to Claim 1, **characterized in that** the sandwich panels are welded with thin cover layers or assembled via an interlocking fastening system and glued together.

4. The lightweight container according to Claim 1, **characterized in that** the hybrid metal panels (4) are hybrid laminates.

5. The lightweight container according to Claim 4, **characterized in that** the hybrid laminates used are designed to be of low residual stress.

6. The lightweight container according to any one of Claims 1 to 5, **characterized in that** the nodes (7) designed to be flexible are bionically optimized connecting nodes with direction-dependent strength.

7. The lightweight container according to Claim 6, **characterized in that** the connection nodes are produced by generative manufacturing methods.

8. The lightweight container according to any one of Claims 1 to 7, **characterized in that** the nodes (7) are connected to frame profiles (3) via plug-in elements (8).

9. The lightweight container according to Claim 8, **characterized in that** for rectangular or square frame profiles (3), the plug-in elements (8) contact them in at least one, preferably three, corner regions of the frame profiles (3).

10. The lightweight container according to any one of Claims 1 to 9, **characterized in that** nodes (7) have eyelets (9) for securing the container (1) on a platform.

11. The lightweight container according to any one of Claims 1 to 10, **characterized in that** the nodes (7) are covered by sealing elements (10) on the outside of the container (1).

12. The lightweight container according to any one of Claims 1 to 11, **characterized in that** for concatenating containers (1), nodes (7) have an additional port for the corresponding node (7) of the further container (1).

## Revendications

1. Container léger avec un châssis support planchéié en profilés de châssis, **caractérisé en ce que**
les profilés de châssis (3) du châssis support sont reliés ensemble par des nœuds conçus de façon souple (7) et **en ce que** le revêtement se compose de ressorts en tôle (4) minces porteurs structurés ou hybrides, conçus pour la déformation, ou de en panneaux sandwich avec couches de recouvrement minces, lesquels sont respectivement raccordés aux profilés de châssis (3).

2. Container léger selon la revendication 1, **caractérisé en ce que**
les ressorts en tôle (4) porteurs structurés ou hybrides sont montés sur les châssis supports par soudage laser (5).

3. Container léger selon la revendication 1, **caractérisé en ce que**
les panneaux sandwich sont soudés avec des couches de recouvrement minces ou sont assemblés et collés par un système de fixation par liaison de forme.

4. Container léger selon la revendication 1, **caractérisé en ce que**
les ressorts en tôle (4) hybrides sont des stratifiés hybrides.

5. Container léger selon la revendication 4, **caractérisé en ce que**
les stratifiés hybrides employés sont formés avec faible tension interne.

6. Container léger selon l'une des revendications 1 à 5, **caractérisé en ce que**
les nœuds conçus de façon souple (7) sont des nœuds de raccord avec rigidité indépendante de la direction optimisés de façon bionique.

7. Container léger selon la revendication 6, **caractérisé en ce que**
les nœuds de raccord sont fabriqués par des procédés de fabrication génératifs.

8. Container léger selon l'une des revendications 1 à 7, **caractérisé en ce que**
les nœuds (7) sont reliés avec des profilés de châssis (3) par des éléments enfichables (8).

9. Container léger selon la revendication 8, **caractérisé en ce que**,
dans le cas de profilés de châssis (3) rectangulaires ou carrés, les éléments enfichables (8) sont en contact avec ceux-ci dans au moins une zone d'angle, de préférence trois zones d'angle du profilé de châssis (3).

10. Container léger selon l'une des revendications 1 à 9, **caractérisé en ce que**
des nœuds (7) présentent des œillets (9) pour la fixation du container (1) sur une plate-forme.

11. Container léger selon l'une des revendications 1 à 10, **caractérisé en ce que**
les nœuds (7) sont recouverts par des éléments d'étanchéité (10) sur le côté extérieur du container (1).

12. Container léger selon l'une des revendications 1 à 11, **caractérisé en ce que**,
pour la juxtaposition de containers (1), les nœuds (7) disposent d'un raccord supplémentaire pour le nœud (7) correspondant du container supplémentaire (1).
